# EUROPEAN PATENT APPLICATION

(11) **EP 4 641 453 A1**
(43) Date of publication of application: **29.10.2025**
(21) Application number: 25166671.5
(22) Date of filing: 27.03.2025
(51) Int. Cl.: G06N 10/40, H05K 9/00, G21K 1/00

(54) **BIASED ELECTROMAGNETIC INTERFERENCE SHIELD FOR ION TRAP OF A QUANTUM COMPUTER**

(30) Priority: 16.04.2024 US 202418637114
(71) Applicant: NXP USA, Inc., Austin, TX 78735 (US)
(72) Inventor: van Veldhoven, Robert, 5656AG Eindhoven (NL); Widdershoven, Franciscus Petrus, 5656AG Eindhoven (NL); Offermann, Bernd, 5656AG Eindhoven (NL)
(74) Representative: Colaiuda, Antonella

(57) **Abstract**

A quantum computer includes an ion trap, a photon detector, and an electromagnetic interference (EMI) shield. The EMI shield is disposed between the ion trap and the photon detector and is configured to be biased by at least one voltage. In at least some implementations, the at least one voltage is a single voltage applied to the EMI shield as a whole. In other implementations, the EMI shield includes a plurality of segments and the at least one voltage includes a plurality of voltages, each applied to a different segment of the plurality of segments.

## Description

### BACKGROUND

Traditional computers utilize bits as their fundamental unit of data, which can exist in either a "0" or "1" state. Quantum computers, on the other hand, use quantum bits or qubits. These qubits can exist in a superposition of both "0" and "1" states, offering a parallelism that could theoretically provide significant computational advantages for specific tasks. Moreover, qubits can be entangled, a unique quantum phenomenon that allows correlated behaviors among particles regardless of distance.

### BRIEF DESCRIPTION OF THE DRAWINGS

The present disclosure may be better understood, and its numerous features and advantages made apparent to those skilled in the art by referencing the accompanying drawings. The use of the same reference symbols in different drawings indicates similar or identical items.
FIG. 1 is a block diagram of a quantum computer implementing an ion trap with a voltage-biased electromagnetic interference (EMI) shield in accordance with some implementations.
FIG. 2 is an isometric view of an example of an ion trap module implementing a voltage-biased EMI shield and shield carrier on a photon detector substrate in accordance with some implementations.
FIG. 3 is an isometric view of another example of the ion trap module implementing a voltage-biased EMI shield and shield carrier on a photon detector substrate in accordance with some implementations.
FIG. 4 is an isometric view of an example of the ion trap module implementing a voltage-biased EMI shield and shield carrier on an ion trap substrate in accordance with some implementations.
FIG. 5 is an isometric view of an example of the ion trap module implementing a segmented voltage-biased EMI shield in accordance with some implementations.
FIG. 6 is an isometric view of another example of the ion trap module implementing a segmented voltage-biased EMI shield in accordance with some implementations.
FIG. 7 is a zoomed-in view of a portion of the ion trap module of FIG. 6 in accordance with some implementations.
FIG. 8 is an isometric view of an example of the ion trap module implementing a voltage-biased EMI shield and shield carrier having angled portions in accordance with some implementations.

### DETAILED DESCRIPTION

Ion trap quantum computing is a type of quantum computing that uses individual ions as qubits. Ions are atoms or molecules that have lost or gained electrons, giving them a net electrical charge. Ions can be trapped in electric and magnetic fields, which allows them to be controlled and manipulated. Ion trap quantum computers work by trapping a number of ions in a vacuum chamber. The ions are then cooled to very low temperatures, which helps to reduce their thermal energy and make them more stable. Once the ions are cooled, they are manipulated using lasers to perform quantum operations. One of the key advantages of ion trap quantum computing is that ions can be individually addressed and manipulated. This makes it possible to create quantum computers with a large number of qubits, which is essential for solving complex problems.

In ion trap quantum computing, the ions are used as the fundamental unit for storing and processing information. In order to read out the quantum state of these ions, highly sensitive photon detectors are utilized. One example of a detector is a single photon avalanche diode (SPAD), which is able to detect single photons, making this type of detector particularly suitable for the delicate operations associated with quantum systems. One of the challenges faced in the integration of SPADs and other photon detectors with ion trap systems is the potential for electric cross-talk between the photon detector and the trapped ions. Such cross-talk can lead to the heating of the ions, which disrupts their quantum state and introduces errors in the computation. Any disturbance to the delicate quantum state of these ions can severely impact the accuracy and reliability of quantum computations.

Some quantum computers implement an electromagnetic interference (EMI) shield between the photon detector and the ions to alleviate the cross-talk issue. The EMI shield reduces the cross-talk between the photon detector and the ions, which preserves the quantum state of the ions and ensures accurate computational processes. However, in some instances, an EMI shield exerts forces or introduces electromagnetic disturbances that alter the position or motion of the trapped ions. This positional change hinders the accurate reading of the ions' state and, by extension, the reliability of quantum operations. Also, while the primary role of the EMI shield is to reduce interference, the shield can inadvertently attenuate or modify the signals the photon detector is designed to detect.

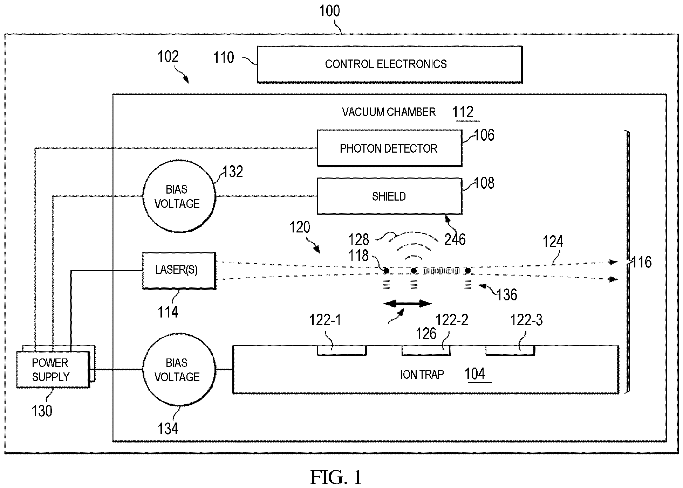

To address these problems and to enable an improved detection rate of photons in a trapped-ion quantum computer, FIG. 1 to FIG. 8 describe trapped-ion quantum computer configurations implementing a voltage-biased EMI shield between a photon detector and trapped ions of the quantum computer. As described below, to reduce the EMI shield's impact on ion position, the EMI shield is biased to a voltage instead of connecting the EMI shield to a ground potential. In at least some implementations, the bias voltage of the EMI shield is set to the electrical potential of the ion positions without the EMI shield, which makes the EMI shield electrically invisible to the ions such that the EMI shield does not influence the position of the ions. In many instances, the direct current (DC) electrodes of the ion trap are biased at different voltages when there are one or more ions in the ion trap. Therefore, in at least some implementations, the EMI shield is biased with a voltage derived from a function that takes the DC voltages of the ion trap electrodes as input parameters. In at least some implementations, the entire EMI shield is biased with a single voltage. However, in other implementations, different segments of the EMI shield are biased with different voltages, which allows the elevation of the ions above the ion trap to be tuned. In at least some implementations, the EMI shield only covers the photon detector or covers the entire ion trap (or at least a portion thereof) to prevent an elevation change when the ions move under the EMI shield. As such, the EMI shield configurations described herein mitigate the negative impact an EMI shield typically has on trapped ions and allow for the photon detector to be situated closer to the ions than conventional EMI shields, which increases the photon detection efficiency and accuracy of the photon detector.

Note that in the following, certain orientational terms, such as top, bottom, front, back, and the like, are used in a relative sense to describe the positional relationship of various components. These terms are used with reference to the relative position of components either as shown in the corresponding figure or as used by convention in the art and are not intended to be interpreted in an absolute sense with reference to a field of gravity. Thus, for example, a surface shown in the drawing and referred to as a top surface of a component would still be properly understood as being the top surface of the component, even if, in implementation, the component was placed in an inverted position with respect to the position shown in the corresponding figure and described in this disclosure. Further, note that certain positional terms, such as co-planar or parallel, will be understood to be interpreted in the context of fabrication tolerances or industry standards. For example, co-planar shall be understood to mean co-planar within applicable tolerances as a result of one or more fabrication processes affecting the components indicated to be co-planar or co-planar within a tolerance utilized in the appropriate industry or fabrication technology. Moreover, it will be appreciated that for simplicity and clarity of illustration, components shown in the figures have not necessarily been drawn to scale. For example, the dimensions of some of the components may be exaggerated relative to other components.

It also should be noted that the terms "contact", "contacts", "contacting", or their equivalents refer to, for example, components, such as layers, features, or surfaces being in physical (direct) contact or indirect contact through one or more intermediate layers, features, or surfaces, or the like. Moreover, a component can be in "electrical contact" with one or more other components, either directly or indirectly, through one or more intermediate components, depending on the electrical conductivity of the components' material(s).

FIG. 1 illustrates a block diagram of a portion 102 of a quantum computer 100 implementing a voltage-biased EMI shield in accordance with at least some implementations. The quantum computer 100, in at least some implementations, is a trapped-ion quantum computer. As such, the quantum computer 100 uses individual ions as the fundamental building blocks or qubits for quantum computation. These ions are electrically charged atoms that can represent quantum information through their internal states.

The portion 102 of the quantum computer 100 illustrated in FIG. 1 includes an ion trap 104, a photon detector 106, an EMI shield 108, control electronics 110, a vacuum chamber 112, and one or more lasers 114. The trap 104, photon detector 106, and shield 108 are collectively referred to herein as the ion trap module 116. In at least some implementations, the ion trap 104, photon detector 106, EMI shield 108, and lasers 114 are disposed within the vacuum chamber 112. The control electronics 110 are used to generate electric fields in the ion trap 104 and to control the photon detector(s) 106 and lasers 114. The different components of the quantum computer 100 communicate with each other through the control electronics 110. In at least some implementations, the control electronics 110 sends signals to the photon detector 106 and laser 114, and the photon detector 106 sends signals back to the control electronics 110. The laser 114, in at least some implementations, also sends signals back to the control electronics 110. The control electronics 110 also communicate with one or more computing systems (not shown), which are used to control the overall operation of the quantum computer 100. The computing system sends signals to the control electronics 110 that indicate to the control electronics 110 what quantum operations to perform and to read out the quantum state of the ions.

During the operation of the quantum computer 100, ions 118 are loaded into the ion trap 104. For example, an amount of vaporized material (e.g., an alkali metal) is introduced into a vacuum chamber of the quantum computer 100. A laser 114 generates a laser pulse 124 (or bundle) that ionizes atoms of the vaporized material into ions 118. It should be understood that the number of ions 118 shown in FIG. 1 is for illustrative purposes only, and a variable number of ions can be loaded into the trap 104 as represented by the vertical lines between the ions 118. The ions 118 are then trapped by the ion trap 104 within a trap area 120. The ion trap 104, in at least some implementations, is a surface electrode ion (SEI) trap disposed on a chip or other substrate. However, it should be understood that other types of ion traps are applicable as well. An SEI trap uses electrodes 122 (illustrated as electrode 122-1 to electrode 122-3) on the surface of the chip or substrate to trap and manipulate ions. For example, an SEI trap uses both radio frequency (RF) and DC electrodes 122 to trap and manipulate ions 118. The RF electrodes (not shown) are used to create an RF field that confines the ions 118 in two dimensions, and the DC electrodes 122 are used to create a static electric field that confines the ions 118 in the third dimension. In at least some implementations, the RF and DC electrodes 122 in an SEI trap are arranged in a linear or ring configuration. However, other configurations are applicable as well. The electrodes 122 are coupled to one or more power supplies 130, which provide one or more biasing voltages 134 to the electrodes 122.

When an RF voltage is applied to the electrodes, the voltage creates an RF field that oscillates in time. The ions 118 are trapped in the quadrupole field created by the oscillating RF voltage. This creates a potential well that traps the ions 118 in two dimensions. The DC electrodes 122 are used to create a static electric field that confines the ions 118 in the third dimension. In at least some implementations, the DC electrodes 122 are arranged in a pattern that creates a four-post potential well. However, other configurations are applicable as well. The ions 118 are attracted to the center of the four-post potential well, which traps the ions 118 in the third dimension. The horizontal lines 136 under each ion 118 indicate the presence of a pseudopotential field that keeps the ions 118 floating at a controlled height above the ion trap 104.

After the ions 118 have been trapped, the ions 118 are cooled and manipulated. The ions 118 are cooled using one or more cooling techniques, such as laser cooling. The cooled ions 118 are then initialized to a known quantum state using one or more techniques. For example, the preparation of trapped ions in specific quantum states involves the application of DC magnetic field to the ions 118. The exposure of the ions 118 to the DC magnetic field lifts the degeneracy of the ions' quantum states and creates distinct energy levels. The ions 118 are further cooled to their quantum ground state. Precisely calibrated pulses of millimeter-wave magnetic fields are then used to manipulate the ions' spins (their internal magnetic orientation). These pulses can excite ions into higher energy states or create superpositions of states ("up" and "down" at the same time). Quantum operations are carried out by carefully controlling the amplitude and duration of these pulses. The interactions between ion spins under the influence of magnetic fields induce entanglement, forming the basis for quantum computations. The laser 114 generates one or more laser pulses 124 tuned to specific frequencies that excite the ions 118 for read-out, and by detecting whether or not the ions 118 fluoresce (re-emit light), their quantum states are determined. It should be understood that the laser pulses 124 shown in FIG. 1 are for illustrative purposes only. In at least some implementations, the laser pulses 124 are aimed at a single ion at a time.

The photon detector 106 measures the state of the ions 118 resulting from the quantum operations performed on the ions 118 by detecting the photons 128 emitted by the ion 118 resulting from the ions 118 being exited by the laser pulses 124. For example, when an ion 118 is in a particular quantum state, the ion 118 emits photons 128 at a specific wavelength. By detecting the wavelength of the emitted photons 128, the state of the ion 118 is determined. One or more of a number of different techniques are used to detect photons. One technique implements a single-photon avalanche diode (SPAD). A SPAD is a type of detector that is very sensitive to individual photons. In at least some implementations, the photon detector 106 is situated opposite (e.g., above or below) the ion trap 104. The photon detector 106, in at least some implementations, is connected to a computing system (not shown) that records the time of each photon detection. The time of each photon detection is used to determine the frequency of the photon 128, which can then be used to determine the state of the ion 118.

In some instances, electric cross-talk occurs between the photon detector 106 and the trapped ions 118. Such cross-talk can lead to the heating of the ions 118, which disrupts their quantum state and introduces errors in the computation. Any disturbance to the delicate quantum state of these ions can severely impact the accuracy and reliability of quantum computations. Therefore, an EMI shield 108 (also referred to herein as "shield 108) is disposed between the ion trap 104 and the photon detector 106 and, more particularly, between the photon detector 106 and the trapped ions 118. The shield 108 reduces the cross-talk between the photon detector 106 and the ions 118, which preserves the quantum state of the ions and ensures accurate computational processes. However, in some instances, an EMI shield exerts unwanted forces on the trapped ions 118 or introduces electromagnetic disturbances that alter the position or motion of the trapped ions 118.

Therefore, the shield 108 is biased to a voltage instead of being connected to a ground potential (as typically done with conventional shields). For example, the shield 108 is electrically coupled to one or more power supplies 130 that provide a biasing voltage 132 to the shield 108. The power supply 130 coupled to the shield 108, in at least some implementations, is the same power supply 130 coupled to one or more other components of the quantum computer 100, such as the ion trap 104 or the photon detector 106. In other implementations, the power supply 130 is coupled to one or more other components of the quantum computer 100. In at least some implementations, the power supply 130 connected to the shield 108 is a DC power supply, and the biasing voltage 132 is a single constant DC voltage. However, in other implementations, multiple different biasing voltages 132 are provided to the shield 108.

The bias voltage 132, in at least some implementations, is set to the electrical potential of the ion positions within the ion trap 104 without the shield 108, which makes the shield 108 electrically invisible to the ions 118 such that the shield 108 does not influence the position of the ions 118. The electrical potential of the ion positions within the ion trap 104, in at least some implementations, is determined using one or more measuring techniques with the shield removed 108, such as voltage probes, electric field probes, photon detection, or the like. For example, voltage probes measure the electric field at different positions within the ion trap 104. By measuring the electric field, the electrical potential of the ion positions can be calculated. Electric field probes directly measure the electric field at different positions within the ion trap 104. The energy of the photons emitted by the ions 118 and measured by the photon detector 106 can be used to determine the electrical potential energy of the ions 118. The electrical potential energy of the ions 118 is then used to calculate the electrical potential of the ion positions.

In at least some instances, there is more than one ion 118 in the ion trap 104, and the DC electrodes 122 of the ion trap 104 are biased at different voltages. Therefore, in at least some implementations, the shield 108 is biased with a voltage 132 derived from a function that takes the DC voltages 134 of the ion trap electrodes 122 as input parameters. In at least some implementations, the entire shield 108 is biased with a single voltage 132. Stated differently, a single voltage 132 is applied to the shield 108 as a whole. However, in other implementations, different segments of the shield 108 are biased with different voltages, which allows the elevation of the ions 118 above the ion trap 104 to be tuned. In at least some implementations, the shield 108 only covers the photon detector 106 or covers the entire ion trap 104 (or at least a portion thereof) to prevent an elevation change when the ions 118 move under the shield 108.

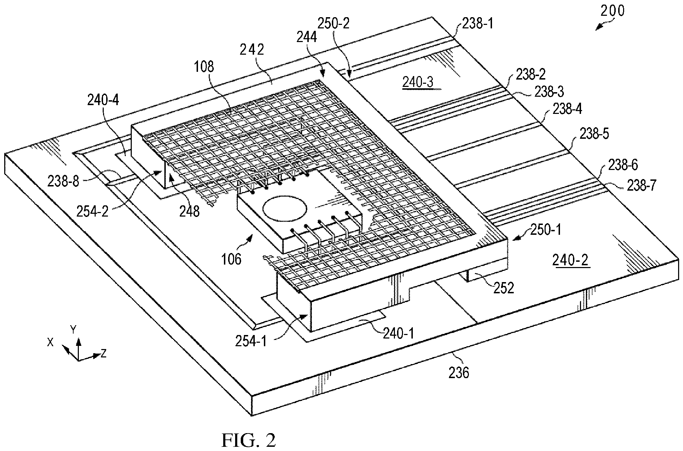

FIG. 2 illustrates an example configuration 200 of a portion of the ion trap module 116, including the photon detector 106 and the shield 108. In this example, the ion trap 104 is not illustrated for brevity. The configuration 200 illustrated in FIG. 2 includes a substrate 236, such as a printed circuit board (PCB), having a plurality of conductive lines/traces 238 (illustrated as line 238-1 to line 238-8) and a plurality of conductive contact areas 240 (illustrated as contact area 240-1 to contact area 240-4) formed thereon. The lines 238 and contact areas 240 include one or more conductive materials, such as copper or gold. At least one of the lines 238 is connected to or contacts at least one of the contact areas 240. Also, one or more of the lines 238 couple the photon detector 106 to one or more components of the ion trap module 116, the quantum computer 100, or a combination thereof. It should be understood that the quantity and configuration of the lines 238 and contact areas 240 shown in FIG. 2 are for illustrative purposes, and other quantities and configurations are applicable as well.

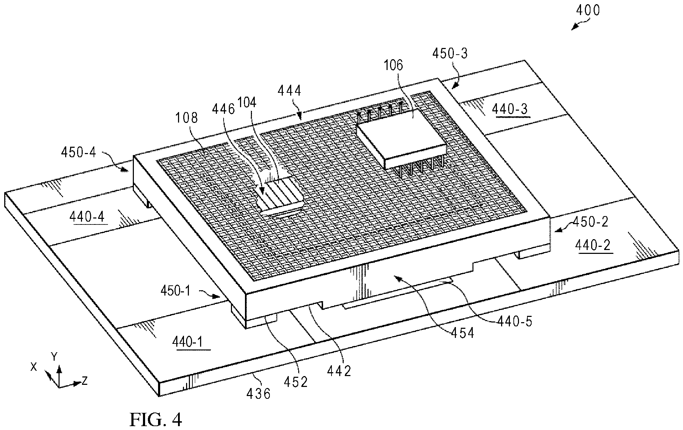

The photon detector 106 and a shield carrier 242 (also referred to herein as a "carrier structure 242") are disposed on the substrate 236. In at least some implementations, shield carrier 242 is comprised of an electrical and thermally conductive material(s), such as copper. The shield carrier 242 at least partially surrounds the photon detector 106 and, in at least some implementations, has a U-shape or a horseshoe shape, but other configurations are applicable as well. In other implementations, the shield carrier 242 completely surrounds the photon detector 106, similar to that shown in FIG. 4 described below. The height of the shield carrier 242 (in the y-direction) is greater than the height of the photon detector 106 (in the y-direction) such that a surface 244 of the shield carrier 242 facing the ion trap 104 is closer to the ion trap 104 than a corresponding surface 246 (FIG. 1) of the photon detector 106.

The shield 108, in at least some implementations, is situated directly (or indirectly) on and in contact with the ion trap facing surface 244 of the shield carrier 242. In other implementations, the shield 108 is situated in direct (or indirect) contact with the inner sidewalls 248 of the shield carrier 242. As such, the shield 108 is situated between the ion trap 104 and the photon detector 106 and, more particularly, between the photon detector 106 and the trapped ions 118 (not shown in FIG. 2). In at least some implementations, the shield 108 includes a porous configuration, such as the mesh configuration illustrated in FIG. 2. However, in other implementations, the shield 108 includes a non-porous (e.g., solid) or other type of configuration. The shield 108, in at least some implementations, is comprised of a conductive material, such as copper, gold, aluminum, or the like.

In at least some implementations, one or more portions 250 (illustrated as portion 250-1 and portion 250-2) of the shield carrier 242 are disposed on and in contact (either directly or indirectly) with an electrically isolating and thermally conducting interposer 252. Examples of electrically isolating and thermally conductive materials that can be used for the interposer(s) 252 include ceramic, sapphire, a combination thereof, or the like. Each interposer 252, in at least some implementations, is in direct (or indirect) contact with one or more of the contact areas 240 of the substrate 236, such as a ground plane. Because the interposer 252 is thermally conductive, the interposer 252 transfers heat away from the shield 108 through the shield carrier 242 and the contact area 240. Also, one or more other portions 254 (illustrated as portion 254-1 and portion 254-2) of the shield carrier 242 are disposed on and in contact (either directly or indirectly) with one or more other contact areas 240 of the substrate 236. These contact areas 240 are electrically coupled to at least one power supply 130 (not shown in FIG. 2) via one or more lines 238 to provide a potential to the shield 108. Stated differently, the shield 108 is biased to one or more voltages 132 through the shield carrier 242 and the contact areas 240 via the lines 238 connected to the power supply 130.

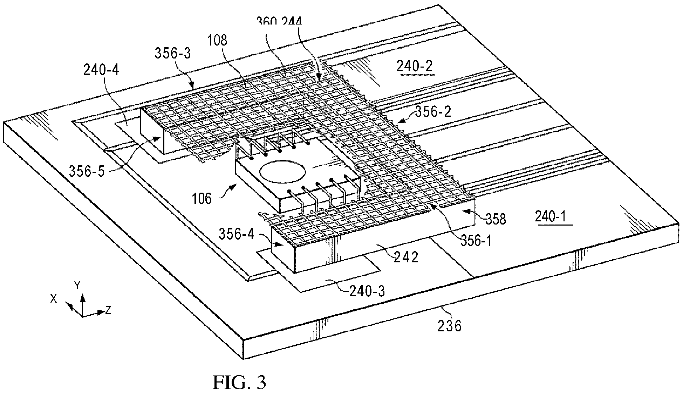

In some implementations, the interposers 252 are not utilized, as shown in FIG. 3. In these implementations, the shield carrier 242 is comprised of an electrically isolating but thermally conducting material, such as ceramic or sapphire, and is disposed in direct or indirect) contact with one or more contact areas 240. First portions 356 (illustrated as portion 356-1 to portion 356-5) of the shield carrier 242 are plated with a conductive material, such as copper or gold, whereas one or more second portions 358 of the shield carrier 242 remain unplated and electrically isolating. For example, FIG. 3 shows that the ion trap facing surface 244 of the shield carrier 242 comprises a conductive plating 360. Also, the portion 356 (e.g., backside) of the shield carrier 242 in contact with the contact area 240-1 (or contact area 240-4), which provides a potential to the shield 108, is also plated with a conductive material. However, the portion(s) 358 of the shield carrier 242 in contact with the contact area 240-2 (or contact area 240-3), which is used to cool the shield 108, remains unplated and electrically isolating.

FIG. 4 illustrates another example configuration 400 of a portion of the ion trap module 116, including the ion trap 104, the photon detector 106, and the shield 108, where the shield 108 is coupled to the ion trap substrate 436 instead of the photon detector substrate 236 illustrated in FIG. 2. In this example, the configuration 400 includes a substrate 436 (also referred to herein as the "ion trap substrate 436"), such as a printed circuit board (PCB), having a plurality of conductive contact areas 440 (illustrated as contact area 440-1 to contact area 440-4) formed thereon. It should be understood that the quantity and configuration of the contact areas 440 shown in FIG. 4 are for illustrative purposes, and other quantities and configurations are applicable as well. **In** at least some implementations, the substrate 436 also includes one or more conductive lines/traces (not shown in FIG. 4). The contact areas 440 include one or more conductive materials, such as copper or gold. At least one of the lines is connected to or contacts at least one of the contact areas 440. Also, one or more of the lines couple the ion trap 104 to one or more components of the ion trap module 116, the quantum computer 100, or a combination thereof. For example, one or more lines couple the electrodes 122 (not shown in FIG. 4) of the ion trap 104 to one or more power supplies 130 (not shown in FIG. 4).

A shield carrier 442 is also disposed on the substrate 302. **In** at least some implementations, the shield carrier 442 is comprised of an electrical and thermally conductive material(s), such as copper. **In** the example illustrated in FIG. 4, the shield carrier 442 completely surrounds the ion trap 104. However, in other implementations, the shield carrier 442 partially surrounds the ion trap 104, similar to the configuration 200 described above with respect to FIG. 2. The height of the shield carrier 442 (in the y-direction) is greater than the height of the ion trap 104 (in the y-direction) such that a surface 444 of the shield carrier 442 facing the photon detector 106 is closer to the photon detector 106 than a corresponding surface 446 of the ion trap 104.

The shield 108, in at least some implementations, is situated directly (or indirectly) on and in contact with the photon detector facing surface 444 of the shield carrier 442. **In** other implementations, the shield 108 is situated in direct (or indirect) contact with the inner sidewalls of the shield carrier 442. As such, the shield 108 is situated between the ion trap 104 and the photon detector 106 and, more particularly, between the photon detector 106 and the trapped ions 118 (not shown in FIG. 4). **In** at least some implementations, the shield 108 includes a porous configuration, such as the mesh configuration illustrated in FIG. 4. However, in other implementations, the shield 108 includes other types of configurations. The shield 108, in at least some implementations, is comprised of a conductive material, such as copper, gold, aluminum, or the like.

**In** at least some implementations, one or more portions 450 (illustrated as portion 450-1 to portion 450-4) of the shield carrier 442 are disposed on and in contact with an electrically isolating and thermally conducting interposer 452. Examples of electrically isolating and thermally conductive materials that can be used for the interposer(s) 452 include ceramic, sapphire, a combination thereof, or the like. Each interposer 452, in at least some implementations, is in direct (or indirect) contact with one or more of the contact areas 440 of the substrate 436, such as a ground plane. Because the interposer 452 is thermally conductive, the interposer 452 transfers heat away from the shield 108 through the shield carrier 442 and contact area 440. In at least some implementations, the interposers 452 are not utilized, and the shield carrier 442 has a configuration similar to that described above with respect to FIG. 3. One or more other portions 454 of the shield carrier 442 are disposed on and in contact with one or more other contact areas 440-5 of the substrate 436. This contact area(s) 440-5 is electrically coupled to at least one power supply 130 (not shown in FIG. 4) via one or more lines (not shown in FIG. 4) to provide a potential to the shield 108. Stated differently, the shield 108 is biased to one or more voltages 132 through the shield carrier 442 and the contact area(s) 440-5 via the lines connected to the power supply 130.

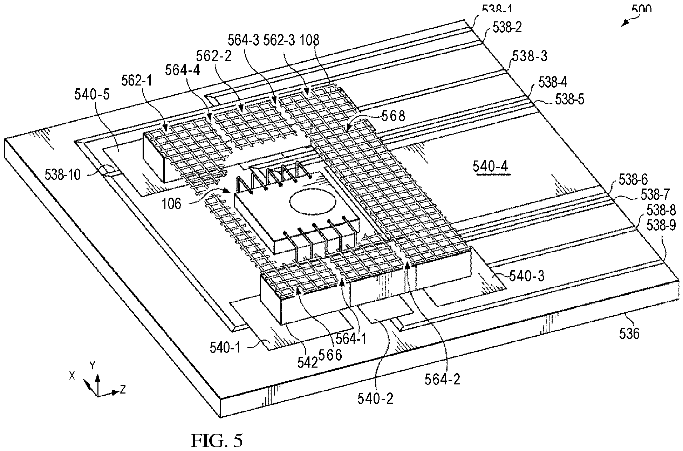

FIG. 5 illustrates an example configuration 500 of a portion of the ion trap module 116, including the photon detector 106 and a segmented configuration for the shield 108. In this example, the ion trap 104 is not illustrated for brevity. The configuration 500 illustrated in FIG. 5 includes a substrate 536, such as a printed circuit board (PCB), having a plurality of conductive lines/traces 538 (illustrated as line 538-1 to line 538-10) and a plurality of conductive contact areas 540 (illustrated as contact area 540-1 to contact area 540-5) formed thereon. The lines 538 and contact areas 540 include one or more conductive materials, such as copper or gold. At least one of the lines 538 is connected to or contacts at least one of the contact areas 540. Also, one or more of the lines 538 couple the photon detector 106 to one or more components of the ion trap module 116, the quantum computer 100, or a combination thereof. It should be understood that the quantity and configuration of the lines 538 and contact areas 540 shown in FIG. 5 are for illustrative purposes, and other quantities and configurations are applicable as well.

The photon detector 106 and a shield carrier 542 are disposed on the substrate 536. In at least some implementations, the shield carrier 542 is comprised of electrically isolating but thermally conducting material, such as ceramic or sapphire, and is disposed in direct (or indirect) contact with one or more contact areas 540. The shield carrier 542 at least partially surrounds the photon detector 106 and, in at least some implementations, has a U-shape or a horseshoe shape, but other configurations are applicable as well. However, in other implementations, the shield carrier 542 completely surrounds the photon detector 106, similar to that shown in FIG. 4 described above. The height of the shield carrier 542 (in the y-direction) is greater than the height of the photon detector 106 (in the y-direction) such that a surface 544 of the shield carrier 542 facing the ion trap 104 is closer to the ion trap 104 than a corresponding surface 546 of the photon detector 106. In at least some implementations, one or more thermally conducting portions 558 of the shield carrier 542 are in contact with one or more of the contact areas 540 of the substrate 536, such as a ground plane. Because this portion 558 of the shield carrier 542 is thermally conductive, the shield carrier 542 transfers heat away from the shield 108 to the contact area 540.

The shield 108, in at least some implementations, is situated directly (or indirectly) on and in contact with the ion trap facing surface 544 of the shield carrier 542. In other implementations, the shield 108 is situated in direct (or indirect) contact with the inner sidewalls 548 of the shield carrier 542. As such, the shield 108 is situated between the ion trap 104 and the photon detector 106 and, more particularly, between the photon detector 106 and the trapped ions 118 (not shown in FIG. 5). In at least some implementations, the shield 108 includes a porous configuration, such as the mesh configuration illustrated in FIG. 5. However, in other implementations, the shield 108 includes a non-porous (e.g., solid) or other type of configuration. The shield 108, in at least some implementations, is comprised of a conductive material, such as copper, gold, aluminum, or the like.

In the configuration 500 illustrated in FIG. 5, the shield 108 is divided into two or more shield segments 562 (illustrated as segment 562-1 to segment 562-3). It should be understood that the quantity and configuration of the segments 562 shown in FIG. 5 are for illustrative purposes, and other quantities and configurations are applicable as well. In at least some implementations, two or more segments 562 of the shield 108 are non-contiguous and electrically isolated from each other by an electrically isolating portion 564 (illustrated as portions 564-1 to 564-4) of the shield carrier 542. Each segment 562, in at least some implementations, includes one or more portions 566 disposed on and in contact with a corresponding conductive portion 568 of the shield carrier 542. In at least some implementations, one or more segments 562 of the shield 108 are disposed in contact with a conductive portion 568 formed on the ion trap facing surface of shield carrier 542. In other implementations, one or more of the segments 562 are disposed in contact with a conductive portion 568 formed on the inner sidewalls of the shield carrier 542.

The conductive portions 568, in at least some implementations, are portions of the shield carrier 542 plated with a conductive material, such as copper or gold. In at least some implementations, the conductive portions 568 are separated by an electrically isolating portion 564 of the shield carrier 542. The conductive portions 568 are formed on the ion trap facing surface 544 of the shield carrier 542, one or more sidewalls of the shield carrier 542, and, in at least some implementations, the surface of the shield carrier 542 facing and in contact with the substrate 536. One or more areas of the conductive portions 568 contact a corresponding contact area 540 of the substrate 536. Each contact area 540 is electrically coupled to at least one power supply 130 (not shown in FIG. 5) via one or more lines 538 to provide a potential to the shield 108. Stated differently, the shield 108 is biased to one or more voltages 132 through the shield carrier 542 and the contact area(s) 540 via the lines 538 connected to the power supply 130. In at least some implementations, each segment 562 of the shield 108 is biased to a different voltage 132. However, in other implementations, two or more segments 562 are biased to the same voltage 132. In at least some implementations, conductive lines, vias, or a combination thereof are formed on or within the shield carrier 362 and are used to electrically couple the shield segments 562 to a corresponding contact area 540 of the substrate 536 instead of forming the conductive portions 568 of the shield carrier 542 using plating. It should be understood that the configurations of the shield carrier 542 and shield 108 described above with respect to FIG. 5 are also applicable to a shield carrier and a shield coupled to an ion trap substrate, such as that shown in FIG. 4.

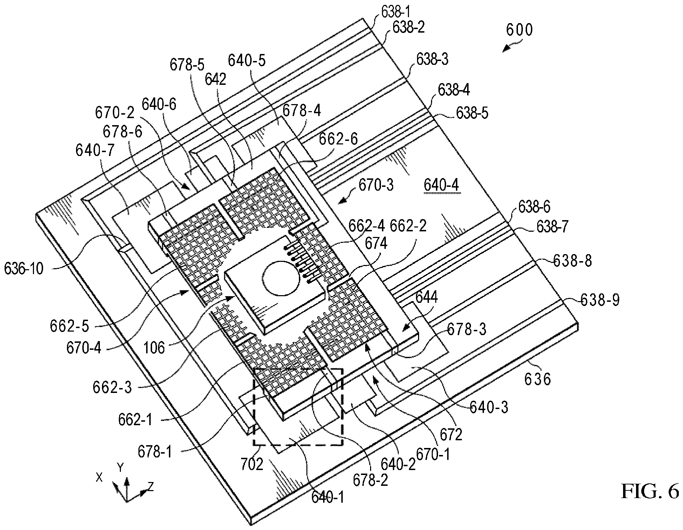

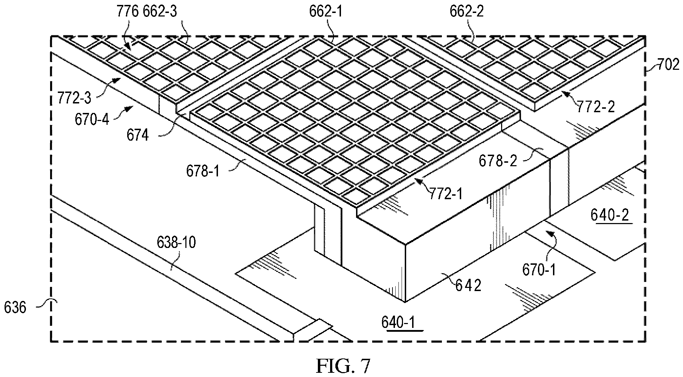

FIG. 6 and FIG. 7 together illustrate another example configuration 600 of a portion of the ion trap module 116, including the photon detector 106 and a segmented configuration for the shield 108. FIG. 7 illustrates a zoomed-in view 702 of a portion of the ion trap module 116. In this example, the ion trap 104 is not illustrated for brevity. The configuration 600 illustrated in FIG. 6 and FIG. 7 includes a substrate 636, such as a printed circuit board (PCB), having a plurality of conductive lines/traces 638 (illustrated as line 638-1 to line 638-10) and a plurality of conductive contact areas 640 (illustrated as contact area 640-1 to contact area 640-7) formed thereon. The lines 638 and contact areas 640 include one or more conductive materials, such as copper or gold. At least one of the lines 638 is connected to or contacts at least one of the contact areas 640. Also, one or more of the lines 238 couple the photon detector 106 to one or more components of the ion trap module 116, the quantum computer 100, or a combination thereof. It should be understood that the quantity and configuration of the lines 638 and contact areas 640 shown in FIG. 6 are for illustrative purposes, and other quantities and configurations are applicable as well.

The photon detector 106 and a shield carrier 642 are disposed on the substrate 636. In at least some implementations, the shield carrier 642 is comprised of electrically isolating but thermally conducting material, such as ceramic or sapphire, and is disposed in direct (or indirect) contact with one or more contact areas 640. The shield carrier 642, in at least some implementations, at least partially surrounds the photon detector 106. However, in other implementations, the shield carrier 642 completely surrounds the photon detector 106, similar to that shown in FIG. 4 described above. In at least some implementations, the shield carrier 642 includes a plurality of portions 670, such as a first portion 670-1, a second portion 670-2, and a third portion 670-3. The second portion 670-2 is situated opposite and parallel to the first portion 670-1, and the third portion 670-3 is situated perpendicular to the first portion 670-1 and the second portion 670-2. In this configuration, the portions 670 collectively form a U-shape or a horseshoe shape, but other configurations are applicable as well. In at least some implementations, the shield carrier 642 also includes a fourth portion 670-4 (also referred to herein as "bridge portion 670-4") that extends from each of the first portion 670-1, second portion 670-2, and third portion 670-3 over the substrate 636 and photon detector 106.

The height of the shield carrier 642 (in the y-direction) is greater than the height of the photon detector 106 (in the y-direction) such that a surface 644 of the shield carrier 642 facing the ion trap 104 is closer to the ion trap 104 than a corresponding surface 646 of the photon detector 106. In at least some implementations, one or more thermally conducting portions of the shield carrier 642, such as a section of portion 670-3, are in contact with one or more of the contact areas 640, such as contact area 640-4 (e.g., a ground plane), of the substrate 636. Because this portion of the shield carrier 642 is thermally conductive, the shield carrier 642 transfers heat away from the shield 108 to the contact area 640.

The shield 108, in at least some implementations, is situated directly (or indirectly) on and in contact with an ion-facing surface 644 of the bridge portion 670-4 of the shield carrier 642. As such, the shield 108 is situated between the ion trap 104 and the photon detector 106 and, more particularly, between the photon detector 106 and the trapped ions 118 (not shown in FIG. 6). In at least some implementations, the shield 108 includes a porous configuration, such as the mesh configuration illustrated in FIG. 6. However, in other implementations, the shield 108 includes a non-porous (e.g., solid) or other type of configuration. The shield 108, in at least some implementations, is comprised of a conductive material, such as copper, gold, aluminum, or the like.

In the configuration 600 illustrated in FIG. 6, the shield 108 is divided into two or more shield segments 662 (illustrated as segment 662-1 to segment 662-6). It should be understood that the quantity and configuration of the segments 662 shown in FIG. 6 are for illustrative purposes, and other quantities and configurations are applicable as well. In at least some implementations, two or more segments 662 of the shield 108 are non-contiguous. The segments 662 are disposed on and in contact with a corresponding segment 672 (illustrated as segments 772-1 to 772-3 in FIG. 7) of the shield carrier bridge portion 670-4.

In at least some implementations, the segments 672 are raised areas of the bridge portion 670-4 that are separated by channels 674 formed in the bridge portion 670-4. The channels 674 electrically isolate each of the shield segments 662 from each other. The electrically isolating material of the bridge portion 670-4 that forms the channels 674 has a thickness that is less than the thickness of shield carrier segments 672, which prevents (or at least mitigates) electrostatic charges at the surface of the shield segments 662. In at least some implementations, the inner area of each segment 672 of the bridge portion 670-4 opposite the openings 776 (FIG. 7) in the shield segments 662 is removed. In other implementations, vias or holes are formed in each segment 672 of the bridge portion 670-4 corresponding to the openings 776 (FIG. 7) in the shield segments 662.

In at least some implementations, conductive lines/traces 678 (illustrated as line 678-1 to line 678-6) or vias are formed on or in the shield carrier 642. One or more of the lines 678 (or vias) electrically couple each shield segment 662 to a contact area 640 of the substrate 636. Each contact area 640 is electrically coupled to at least one power supply 130 (not shown in FIG. 6) via one or more lines 638 to provide a potential to the shield 108. Stated differently, the shield 108 is biased to one or more voltages 132 through the lines 678 of the shield carrier 642, the contact area(s) 640, and the lines 638 of the substrate 636 connected to the power supply 130. In at least some implementations, each shield segment 662 is biased to a different voltage 132. However, in other implementations, two or more segments 662 are biased to the same voltage 132. It should be understood that the configurations of the shield carrier 642 and shield 108 described above with respect to FIG. 6 are also applicable to a shield carrier and a shield coupled to an ion trap substrate, such as that shown in FIG. 4.

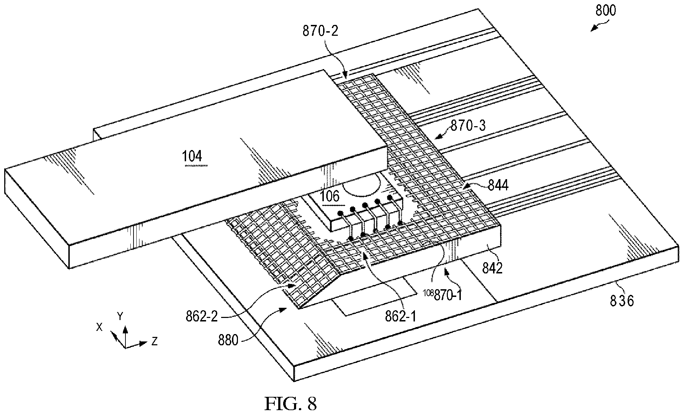

FIG. 8 illustrates an example configuration 800 of a portion of the ion trap module 116, including the ion trap 104, photon detector 106, and the shield 108. **In** this example, the configuration 800 is similar to the configuration 200 described above with respect to FIG. 2. Therefore, the description provided above with respect to FIG. 2 is applicable to the configuration 800 of FIG. 8 and will not be repeated. However, in the example shown in FIG. 8, the shield carrier 842 and shield 108 include an angled configuration. For example, the shield carrier 842 includes a plurality of portions 870, such as a first portion 870-1, a second portion 870-2, and a third portion 870-3. The second portion 870-2 is situated opposite and parallel to the first portion 870-1, and the third portion 870-3 is situated perpendicular to the first portion 870-1 and the second portion 870-2. **In** this configuration, the portions 870 collectively form a U-shape or a horseshoe shape, but other configurations are applicable as well.

An end section 880 of the first portion 870-1 of the shield carrier 842 and an end section (not shown) of the second portion 870-2 of the shield carrier 842 are angled with respect to the remaining sections (e.g., flat sections) of the first portion 870-1 and second portion 870-2 of the shield carrier 842, which are flat/straight (i.e., not angled). For example, starting at the surface 844 of the shield carrier 842 facing the ion trap 104, the end sections 880 slope toward the substrate 836. The shield 108 is situated directly (or indirectly) on and in contact with the ion trap facing surface 844 of the shield carrier 842. **In** other implementations, the shield 108 is situated in direct (or indirect) contact with the inner sidewalls of the shield carrier 842. The shield 108 includes a flat (first) segment 862-1 disposed in contact (direct or indirect) with corresponding flat areas/sections of the first portion 870-1, second portion 870-2, and third portion 870-3 of the shield carrier 842. The shield 108 also includes an angled (second) segment 862-2 disposed on and in contact with the angled end sections 880 of the shield carrier 842. The angled segment 862-2 is angled with respect to the flat segment 862-1 of the shield 108. For example, the angled segment 862-2 slopes towards the substrate 836. **In** at least some implementations, the flat segment 862-1 of the shield 108 is connected to the angled segment 862-2 of the shield 108. At least a portion of the ion trap 104 extends over (or under) at least a portion of the angled segment 862-2 of the shield 108. The angled configuration of the shield 108 prevents (or at least mitigates, a sudden voltage change when a moved ion 118 reaches the shielded region to prevent bouncing within the potential pot of the ion trap 104.

Note that not all of the activities or elements described above in the general description are required, that a portion of a specific activity or device may not be required, and that one or more further activities may be performed or elements included in addition to those described. Still further, the order in which activities are listed are not necessarily the order in which they are performed. Also, the concepts have been described with reference to specific implementations. However, one of ordinary skill in the art appreciates that various modifications and changes can be made without departing from the scope of the present disclosure as set forth in the claims below. Accordingly, the specification and figures are to be regarded in an illustrative rather than a restrictive sense, and all such modifications are intended to be included within the scope of the present disclosure.

Benefits, other advantages, and solutions to problems have been described above with regard to specific implementations. However, the benefits, advantages, solutions to problems, and any feature(s) that may cause any benefit, advantage, or solution to occur or become more pronounced are not to be construed as a critical, required, or essential feature of any or all the claims. Moreover, the particular implementations disclosed above are illustrative only, as the disclosed subject matter may be modified and practiced in different but equivalent manners apparent to those skilled in the art having the benefit of the teachings herein. No limitations are intended to the details of construction or design herein shown, other than as described in the claims below. It is therefore evident that the particular implementations disclosed above may be altered or modified and all such variations are considered within the scope of the disclosed subject matter. Accordingly, the protection sought herein is as set forth in the claims below.

## Claims

1. An ion trap module, comprising:
an ion trap;
a photon detector; and
an electromagnetic interference (EMI) shield disposed between the ion trap and the photon detector, the EMI shield configured to be biased by at least one voltage.

2. The ion trap module of claim 1, wherein the EMI shield one of:
entirely covers the photon detector and partially covers the ion trap, or entirely covers the photon detector and the ion trap.

3. The ion trap module of claim 1 or claim 2, wherein the at least one voltage is a single voltage applied to the EMI shield as a whole.

4. The ion trap module according to any preceding claim, wherein the EMI shield comprises a plurality of segments and the at least one voltage comprises a plurality of voltages, each applied to a different segment of the plurality of segments.

5. The ion trap module according to any preceding claim4, further comprising:
a carrier structure disposed on a substrate,
wherein the EMI shield is disposed on the carrier structure.

6. The ion trap module of claim 5, wherein the substrate comprises one of the ion trap or the photon detector.

7. The ion trap module of claim 5, wherein the carrier structure comprises:
a first portion comprising a first flat section and a first angled section;
a second portion opposite the first portion, the second portion comprising a second flat section and a second angled section; and
a third portion perpendicular to the first portion and the second portion, the third portion comprising a third flat section,
wherein the EMI shield comprises at least a first segment and a second segment, the first segment disposed on the first flat section, the second flat section, and the third flat section, and the second segment disposed on the first angled section and the second angled section.

8. A quantum computer, comprising:
an ion trap;
a photon detector; and
an electromagnetic interference (EMI) shield disposed between the ion trap and the photon detector, the EMI shield configured to be biased by at least one voltage.

9. The quantum computer of claim 8, wherein the EMI shield one of:
entirely covers the photon detector and partially covers the ion trap, or entirely covers the photon detector and the ion trap.

10. The quantum computer of claim 8 or claim 9, wherein the at least one voltage is a single voltage applied to the EMI shield as a whole.

11. The quantum computer according toclaim 8 to claim 10, wherein the EMI shield comprises a plurality of segments and the at least one voltage comprises a plurality of voltages, each applied to a different segment of the plurality of segments.

12. The quantum computer according to claim 8 to claim 11, further comprising:
a carrier structure disposed on a substrate,
wherein the EMI shield is disposed on the carrier structure.

13. The quantum computer of claim 12, wherein the substrate comprises one of the ion trap or the photon detector.

14. The quantum computer of claim 12, wherein the carrier structure comprises:
a first portion comprising a first flat section and a first angled section;
a second portion opposite the first portion, the second portion comprising a second flat section and a second angled section; and
a third portion perpendicular to the first portion and the second portion, the third portion comprising a third flat section,
wherein the EMI shield comprises at least a first segment and a second segment, the first segment disposed on the first flat section, the second flat section, and the third flat section, and the second segment disposed on the first angled section and the second angled section.
